# FASCICULE DE BREVET EUROPEEN

(11) **EP 4 037 955 B1**
(45) Date de publication et mention de la délivrance du brevet: **26.02.2025**
(21) Numéro de dépôt: 20780700.9
(22) Date de dépôt: 30.09.2020
(51) Int. Cl.: B62D 1/06, B60R 16/027

(54) **CÂBLAGE SUPPORTÉ PAR NAPPE**
GEWEBEGESTÜTZTE VERDRAHTUNG
FABRIC-SUPPORTED WIRING

(30) Priorité: 03.10.2019 FR 1910971
(43) Date de publication de la demande: 10.08.2022
(73) Titulaire: Autoliv Development AB, 447 83 Vårgårda (SE)
(72) Inventeur: POINT, Jeremie, 86170 Cherves (FR)
(74) Mandataire: Novagraaf International SA
(86) Numéro de dépôt international: PCT/EP2020/077291
(87) Numéro de publication internationale: WO 2021/063980

(56) Documents cités:
- WO-A1-2014/126999
- WO-A1-2015/179730
- WO-A1-2019/105923
- DE-A1- 102009 055 424
- FR-A1- 3 070 663
- US-A1- 2019 036 527

## Description

### DOMAINE TECHNIQUE

La présente invention concerne de manière générale le domaine des volants de véhicule, et plus particulièrement le câblage de ceux-ci.

Avec le développement des fonctionnalités offertes au conducteur ou utilisateur de véhicule automobile (voiture y compris voiture autonome, camion et d'une manière générale tout type de véhicule), la fabrication des volants est devenue plus complexe et plus coûteuse. En outre, en multipliant les fonctions disponibles pour l'utilisateur, il convient d'optimiser l'ergonomie et le câblage des différents éléments constitutifs.

### ART ANTÉRIEUR

Le document de l'art antérieur EP1046565 divulgue un volant comprenant des dispositifs de commande électrique sur la jante et les branches du volant. En outre, le document DE 10 2009 055424 A1 divulgue le préambule de la revendication indépendante.

Le volant de l'art antérieur cité ci-dessus présente notamment l'inconvénient de ne pas permettre un câblage compact du volant ni de positionner des éléments électriques sur un large pourtour du volant. En outre, il n'est pas prévu la possibilité d'avoir des éléments électriques de différentes natures ni de faciliter le câblage au moment de la fabrication.

### RÉSUMÉ DE L'INVENTION

Dans ce but et dans un premier aspect, la présente invention concerne une gaine composite pour un volant de véhicule,
le volant comprenant une jante et au moins un premier dispositif électrique, tel qu'un interrupteur ou un ruban lumineux,
la gaine composite étant agencée pour être gainée sur la jante,
la gaine composite comprenant au moins un deuxième dispositif électrique, tel qu'un fil résistif chauffant ou une trame métallique pour un capteur capacitif,
caractérisée en ce que
la gaine composite comprend en outre un conducteur électrique agencé pour être connecté à au moins un premier dispositif électrique distinct du deuxième dispositif électrique.

La gaine composite est agencée pour recouvrir au moins partiellement la jante.

En d'autres termes, la présente invention concerne une gaine composite agencée pour être gainée sur un volant de véhicule, la gaine composite comprenant au moins un deuxième dispositif électrique, tel qu'un fil résistif chauffant ou une trame électrique pour un capteur capacitif, et au moins un conducteur électrique agencé pour être connecté à au moins un premier dispositif électrique du volant, tel qu'un interrupteur ou un ruban lumineux et distinct du deuxième dispositif électrique.

Ceci permet de proposer une gaine composite pour un volant de véhicule facilitant le montage ou la fabrication, en particulier en économisant des étapes de câblage, d'améliorer la durée de vie par un câblage plus robuste et plus simple, et permettant le câblage aisé sur une large portion de volant avec un arrangement compact du câblage. En outre, ceci permet notamment de proposer des dispositifs électriques de nature identique ou différente sur le volant.

En particulier, il est à noter de la mise en oeuvre ci-dessus que le premier dispositif électrique fait partie du volant de véhicule, qui comprend par ailleurs la gaine composite. Autrement dit, le premier dispositif électrique est distinct de la gaine composite, puisqu'il ne fait pas partie de cette dernière. Cependant, la gaine composite embarque un élément de câblage qui est dédié à la connexion du premier dispositif électrique, ce qui limite le nombre de composants à assembler.

Avantageusement, le premier dispositif électrique peut être indépendant du deuxième dispositif électrique.

Ceci permet de proposer une gaine composite pour volant avec un large panel de fonctionnalités électriques, sans gêner le fonctionnement de l'une par rapport à l'autre, en permettant un arrangement compact et en facilitant le câblage pour la fabrication et la maintenance.

Avantageusement, le deuxième dispositif électrique peut comprendre le conducteur électrique.

Ceci permet de faciliter la fabrication et le montage de la gaine composite et du volant, notamment en économisant une étape de montage par le montage commun du deuxième dispositif électrique et du conducteur électrique.

Avantageusement, le premier ou le deuxième dispositif électrique peut présenter une fonctionnalité pour le conducteur ou l'utilisateur.

Avantageusement, le premier ou le deuxième dispositif électrique peut comprendre une interface d'utilisation.

En d'autres termes, le premier ou le deuxième dispositif électrique ne sont pas uniquement des conducteurs électriques, mais sont des dispositifs électriques dotés d'une fonctionnalité et d'une interface homme-machine pour le conducteur ou l'utilisateur.

Avantageusement, le conducteur électrique peut être un fil électrique ou un faisceau de connexion.

Avantageusement, le conducteur électrique peut être composé d'une pluralité de fils, de préférence gainés.

Avantageusement, le conducteur électrique peut être un câble ou une nappe électrique.

Ceci permet de proposer une gaine composite pour volant ayant un câblage aisé et robuste, facilitant la production et augmentant la durée de vie.

De préférence, le conducteur électrique peut être collé, cousu, noyé ou imprimé dans ou sur la gaine composite.

Ceci permet de proposer une gaine composite pour volant ayant un câblage aisé et robuste, facilitant la production et augmentant la durée de vie. En outre, cela améliore la protection du conducteur électrique et cela permet l'utilisation de procédé de fabrication additive.

Dans un mode de réalisation, le conducteur électrique peut comprendre au moins un connecteur.

Dans un mode de réalisation particulier, l'au moins un connecteur peut être agencé à au moins une extrémité du conducteur électrique.

Avantageusement, le volant peut comprendre deux premiers dispositifs électriques, et le conducteur électrique est divisé en deux portions, chaque portion étant raccordée à un des deux premiers dispositifs électriques.

Ceci permet de proposer une gaine composite pour volant facilitant la connexion des dispositifs électriques et le câblage, notamment pour le cas de premiers dispositifs électriques arrangés de part et d'autre du volant.

Un deuxième aspect de la présente invention concerne un volant de véhicule comprenant une jante et une gaine composite selon le premier aspect, la gaine composite étant agencée pour recouvrir au moins partiellement la jante.

Ceci permet de proposer un volant avec une gaine composite ayant une fabrication facilitée, un câblage aisé et robuste, une grande compacité, une meilleure durée de vie et une grande étendue de fonctionnalité offerte au conducteur.

Un troisième aspect de la présente invention concerne un véhicule comprenant un volant selon l'aspect précédent.

Ceci permet de proposer un véhicule avec un volant offrant de larges fonctionnalités au conducteur, tout en proposant un arrangement compact, une excellente durée de vie et une grande robustesse, pour une fabrication aisée et simplifiée.

### BRÈVE DESCRIPTION DES FIGURES

D'autres caractéristiques et avantages de la présente invention apparaîtront plus clairement à la lecture de la description détaillée qui va suivre et qui présente différents modes de réalisation de l'invention donnés à titre d'exemples nullement limitatifs et illustrés par les figures annexées dans lesquelles :
[Fig. 1] représente un mode de réalisation d'un volant de véhicule comprenant une gaine composite non recouverte en vue de face et une jante de volant suivant un premier mode de réalisation;
[Fig. 2] représente une vue en coupe de la gaine composite et de la jante suivant un deuxième mode de réalisation.

### DESCRIPTION DÉTAILLÉE

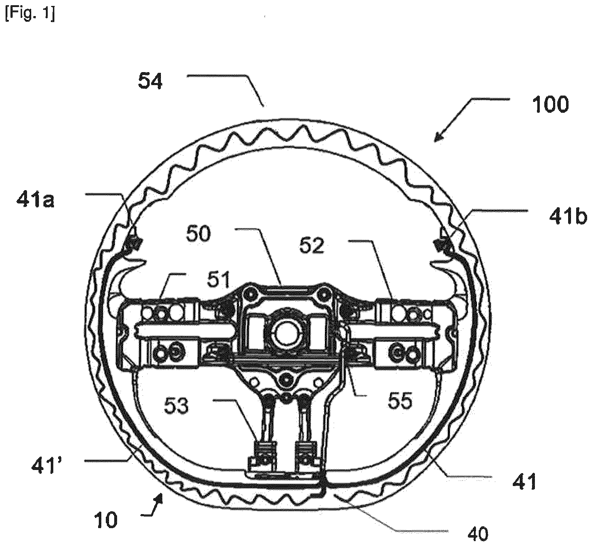

La figure 1 représente un mode de réalisation d'un volant de véhicule comprenant une gaine composite non recouverte en vue de face suivant un premier mode de réalisation.

Le volant 100 est représenté de face, c'est-à-dire vu depuis le conducteur du véhicule.

Le volant 100 comprend un moyeu central 50, trois branches (ici des branches doubles) 51, 52, 53 et une jante 54. Les branches 51, 52, 53 relient le moyeu central 50 à la jante 54. Le volant 100 comprend en outre une gaine composite 10.

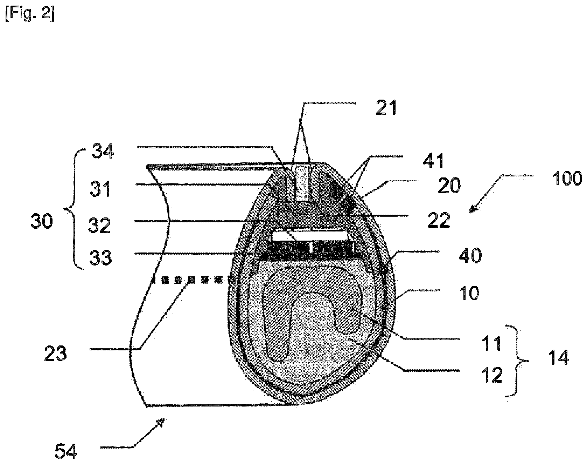

La gaine composite 10 est agencée pour recouvrir au moins partiellement la jante 54 et comprend un premier conducteur électrique 41 ayant à une de ses extrémités un connecteur 41b ainsi qu'un deuxième conducteur électrique 41' ayant à une de ses extrémités un connecteur 41a. Les connecteurs 41a et 41b sont agencés pour être reliés à un dispositif de commande tel qu'un interrupteur par exemple logé sur une branche du volant. Les autres extrémités des conducteurs 41 et 41' sont agencées pour être connectées à une autre partie du premier dispositif électrique 30. Les connecteurs 41a et 41b peuvent être connectés à différent types de premiers dispositifs électriques 30 tels que des électrodes ou des dispositifs lumineux (représentés à la figure 2) ou des interrupteurs (non représentés) dans ce mode de réalisation, et donc distincts de la gaine composite.

La figure 2 représente une vue en coupe de de la jante 54 du volant 100 comprenant la gaine composite 10 suivant un deuxième mode de réalisation.

La jante 54 du volant 100 comprend une armature 11 (réalisée en métal, comme de l'aluminium ou du magnésium), et un matériau de surmoulage 12 (du polyuréthane par exemple, et aussi appelé moussage ou matériau de moussage), surmoulé autour de l'armature 11 pour former un support 14.

La gaine composite 10 est recouverte d'une gaine externe 20 (typiquement en cuir naturel ou artificiel, mais d'autres matériaux sont possibles), dont des extrémités sont reliées par collage, et éventuellement par une couture 23 bord à bord.

Le volant 100 comprend un premier dispositif électrique 30 tel qu'un ruban lumineux ou une électrode de mesure de paramètre vital du conducteur traversant au moins partiellement la gaine externe 20, pour servir d'interface avec le conducteur et/ou envoyer des signaux lumineux par exemple.

En effet, le premier dispositif électrique 30 comprend un circuit électronique (un circuit imprimé 32 fixé sur le support 14, embarquant des sources de lumière (des diodes électroluminescentes par exemple), une interface de fixation inférieure 33, une interface de fixation supérieure 31 (qui peut être transparente ou localement percée pour laisser passer la lumière) et un guide lumière 34, pour pouvoir illuminer une partie du volant, de sorte à améliorer l'ergonomie ou l'interface homme machine du véhicule.

Il est donc nécessaire de traverser la gaine externe 20 pour envoyer les signaux lumineux au conducteur à partir d'éléments disposés sur le support 14 et sous la gaine externe 20. Cependant, la gaine externe 20 est typiquement réalisée à partir d'une bande de matière (ou plusieurs bandes de matière) qu'il faut, en cours de montage, gainer autour de la jante. L'interface de fixation supérieure 31 comprend une rainure 22 agencée pour recevoir le guide lumière 34 et des rabats ou rembordements 21 de la gaine externe 20 repliés vers l'intérieur de la jante 54 et adjacents aux bords du guide lumière 34.

La gaine composite 10 comprend en outre un deuxième élément électrique 40 tel qu'une nappe chauffante ou un capteur de proximité en complément du conducteur électrique 41 agencé pour être connecté au premier dispositif électrique 30. Il est à noter que le premier dispositif électrique 30 sur cette figure est agencé plutôt au centre de la jante et se trouve donc séparé de la gaine composite 10 agencée en périphérie de la jante, sous la gaine externe 20. En d'autres termes, le premier dispositif électrique 30 est distinct de la gaine composite 10.

Le conducteur électrique 41 est de préférence un fils ou une pluralité de fils électriques, une nappe électrique ou encore un câble électrique. Le conducteur électrique 41 peut être imprimé dans ou sur la gaine composite 10, ou collé, cousu ou noyé. Ceci permet notamment d'augmenter la durée de vie des composants par une bonne tenue et une simplification du design de la gaine composite 10 et du volant 100.

Dans un mode de réalisation particulièrement avantageux, le conducteur électrique 41 peut être formé avec le deuxième dispositif électrique 40. Ainsi, par exemple, lorsque le deuxième dispositif électrique 41 est une nappe chauffante pouvant recouvrir une grande portion de la jante 54, le conducteur électrique 41 peut être un fils ou un conducteur imprimé compris dans la nappe chauffante, en plus des fils résistifs (ou trame métallique) de la nappe chauffante, ce qui permet de monter directement le conducteur électrique 41 avec la nappe chauffante.

Le conducteur électrique 41 comprend deux connecteurs 41a, 41b représentés en figure 1. Le volant 100 peut comprendre deux premiers dispositifs électriques 30 connectés aux deux connecteurs 41a, 41b positionnés aux extrémités de deux portions du conducteur électrique 41.

En particulier, il est fait référence au premier dispositif électrique 30 ayant un guide lumière 34 agencé en surface de la jante du volant, et traversant la gaine externe 20, mais on peut envisager de prévoir comme premier dispositif électrique 30 une interface de commande, un capteur de position, un élément de capteur biométrique, des boutons qui traversent la gaine externe 20.

La gaine externe 20 peut être réalisée à partir de plusieurs bandes de même matière ou de matières différentes (cuir, synthétique, tissu, etc).

Le premier dispositif électrique 30 peut également être une ou plusieurs diodes électroluminescentes, un écran à cristaux liquides ou plasma, un dispositif électro-acoustique, un dispositif photographique ou vidéo, ou encore un dispositif de reconnaissance digitale ou visuelle.

Enfin, l'ouverture de passage ou rainure 22 pour le guide lumière 34 (ou dispositif lumineux) peut être en regard du conducteur pour afficher des informations lumineuses, mais on peut également pratiquer l'ouverture sur un côté de la jante opposé au conducteur, pour y faire passer un capteur de détection des doigts du conducteur par exemple. ;

## Revendications

1. Gaine composite (10) pour un volant de véhicule (100),
le volant (100) comprenant une jante (54) et au moins un premier dispositif électrique (30), tel qu'un interrupteur ou un ruban lumineux,
la gaine composite (10) étant agencée pour être gainée sur la jante (54),
la gaine composite (10) comprenant au moins un deuxième dispositif électrique (40), tel qu'un fil résistif chauffant ou une trame métallique pour un capteur capacitif,
**caractérisée en ce que**
la gaine composite (10) comprend en outre un conducteur électrique (41) agencé pour être connecté à au moins un premier dispositif électrique (30) distinct de la gaine composite (10) et du deuxième dispositif électrique (40).

2. Gaine composite (10) selon la revendication précédente, dans laquelle le conducteur électrique (41) est un câble ou une nappe électrique.

3. Gaine composite (10) selon l'une des revendications précédentes, dans laquelle le conducteur électrique (41) est composé d'une pluralité de fils.

4. Gaine composite (10) selon l'une des revendications précédentes, dans laquelle le conducteur électrique (41) est collé, cousu, noyé ou imprimé dans ou sur la gaine composite (10).

5. Gaine composite (10) selon l'une des revendications précédentes, dans laquelle le conducteur électrique (41) comprend au moins un connecteur (41a, 41b).

6. Gaine composite (10) selon la revendication précédente, dans lequel l'au moins un connecteur (41a, 41b) est agencé à au moins une extrémité du conducteur électrique (41).

7. Gaine composite (10) selon l'une des revendications précédentes,
le volant comprenant deux premiers dispositifs électriques (30), et
dans laquelle le conducteur électrique (41) est divisé en deux portions, chaque portion étant raccordée à un des deux premiers dispositifs électriques (30).

8. Volant de véhicule (100) comprenant une jante (54) et une gaine composite (10) selon l'une des revendications précédentes, la gaine composite (10) étant agencée pour recouvrir au moins partiellement la jante (54).

9. Véhicule comprenant un volant (100) selon la revendication précédente.

## Patentansprüche

1. Verbundummantelung (10) für ein Fahrzeuglenkrad (100), das Lenkrad (100) umfassend einen Radkranz (54) und mindestens eine erste elektrische Vorrichtung (30), wie beispielsweise einen Schalter oder ein Lichtband,
wobei die Verbundummantelung (10) angeordnet ist, um den Radkranz (54) zu ummanteln,
die Verbundummantelung (10) umfassend mindestens eine zweite elektrische Vorrichtung (40), wie beispielsweise einen Widerstandsheizdraht oder ein Metallgerüst für einen kapazitiven Sensor, **dadurch gekennzeichnet, dass**
die Verbundummantelung (10) ferner einen elektrischen Leiter (41) umfasst, der angeordnet ist, um mit mindestens einer ersten elektrischen Vorrichtung (30) verbunden zu werden, die sich von der Verbundummantelung (10) und der zweiten elektrischen Vorrichtung (40) unterscheidet.

2. Verbundummantelung (10) nach dem vorstehenden Anspruch, wobei der elektrische Leiter (41) ein Kabel oder eine elektrische ebene Anordnung ist.

3. Verbundummantelung (10) nach einem der vorstehenden Ansprüche, wobei der elektrische Leiter (41) aus einer Vielzahl von Drähten zusammengesetzt ist.

4. Verbundummantelung (10) nach einem der vorstehenden Ansprüche, wobei der elektrische Leiter (41) in oder auf die Verbundummantelung (10) geklebt, genäht, eingebettet oder gedruckt ist.

5. Verbundummantelung (10) nach einem der vorstehenden Ansprüche, wobei der elektrische Leiter (41) mindestens einen Verbinder (41a, 41b) umfasst.

6. Verbundummantelung (10) nach dem vorstehenden Anspruch, wobei der mindestens eine Verbinder (41a, 41b) an mindestens einem Ende des elektrischen Leiters (41) angeordnet ist.

7. Verbundummantelung (10) nach einem der vorstehenden Ansprüche, das Lenkrad umfassend zwei erste elektrische Vorrichtungen (30), und wobei der elektrische Leiter (41) in zwei Abschnitte unterteilt ist, wobei jeder Abschnitt an eine der zwei ersten elektrischen Vorrichtungen (30) angeschlossen ist.

8. Fahrzeuglenkrad (100), umfassend einen Radkranz (54) und eine Verbundummantelung (10) nach einem der vorstehenden Ansprüche, wobei die Verbundummantelung (10) angeordnet ist, um den Kranz (54) mindestens teilweise abzudecken.

9. Fahrzeug, umfassend ein Lenkrad (100) nach dem vorstehenden Anspruch.

## Claims

1. Composite sheath (10) for a vehicle steering wheel (100), the steering wheel (100) comprising a rim (54) and at least one first electrical device (30), such as a switch or a light strip,
the composite sheath (10) being arranged to sheathe the rim (54),
the composite sheath (10) comprising at least one second electrical device (40), such as a resistive heating wire or a metal frame for a capacitive sensor, **characterized in that**
the composite sheath (10) further comprises an electrical conductor (41) arranged so as to be connected to at least one first electrical device (30) which is separate from the composite sheath (10) and from the second electrical device (40).

2. Composite sheath (10) according to the preceding claim, wherein the electrical conductor (41) is a cable or an electrical ribbon cable.

3. Composite sheath (10) according to any of the preceding claims, wherein the electrical conductor (41) is composed of a plurality of wires.

4. Composite sheath (10) according to any of the preceding claims, wherein the electrical conductor (41) is adhesively bonded, sewn, embedded or printed in or on the composite sheath (10).

5. Composite sheath (10) according to any of the preceding claims, wherein the electrical conductor (41) comprises at least one connector (41a, 41b).

6. Composite sheath (10) according to the preceding claim, wherein the at least one connector (41a, 41b) is arranged at at least one end of the electrical conductor (41).

7. Composite sheath (10) according to any of the preceding claims,
the steering wheel comprising two first electrical devices (30), and
wherein the electrical conductor (41) is divided into two portions, each portion being connected to one of the two first electrical devices (30).

8. Vehicle steering wheel (100) comprising a rim (54) and a composite sheath (10) according to any of the preceding claims, the composite sheath (10) being arranged to cover the rim (54) at least partially.

9. Vehicle comprising a steering wheel (100) according to the preceding claim.
